# EUROPEAN PATENT APPLICATION

(11) **EP 1 748 328 A1**
(43) Date of publication of application: **31.01.2007**
(21) Application number: 05739193.0
(22) Date of filing: 10.05.2005
(51) Int. Cl.: G03H 1/22, G11B 7/0065, G11B 7/135

(54) **HOLOGRAM DEVICE**

(30) Priority: 21.05.2004 JP 2004152135
(71) Applicant: ALPS ELECTRIC CO., LTD., Tokyo 145-8501 (JP)
(72) Inventor: Someno, Yoshihiro, 1458501 (JP)
(74) Representative: Klunker . Schmitt-Nilson . Hirsch
(86) International application number: PCT/JP2005/008529
(87) International publication number: WO 2005/114336

(57) **Abstract**

A compact hologram apparatus capable of high-speed processing is provided.

A hologram apparatus 1 includes a light emitter 30 that applies light onto a recording medium 10 on which a plurality of holograms 11 are provided, and a light receiver 20 that receives light exiting from the holograms 11. The light receiver 20 includes a substrate 22 having multiple light-receiving elements 21 arranged on a surface thereof, and the light emitter 30 includes a plurality of light-emitting elements 31 arranged in an array on the substrate 22 of the light receiver 20 so as to be combined with the light receiver 20.

## Description

### Technical Field

The present invention relates to a hologram apparatus that records and reproduces information by entering laser light in a recording medium, and more particularly, to a hologram apparatus in which a light emitter is disposed on a substrate of a light receiver.

### Background Art

Storage devices which two-dimensionally write and read information on and from a recording medium by using magnetism and light have been widely used in computers and the like. For example, hard disks are known as recording media using magnetism, and CDs and DVDs are known as storage devices using light. In order to meet a demand to increase the capacity, these storage devices have made marked progress in recording density. As a means for further increasing the capacity, a storage apparatus using the hologram principle has been developed.

A hologram apparatus writes information page by page on a recording medium, and reads and reproduces the information. Each page of coded information is written on a recording medium as a pattern of changes in refractive index. This pattern is a hologram formed by interference between object light and reference light in a storage apparatus. In order to read information from the recording medium, only reference light is entered from a light emitter in the recording medium, is diffracted by the pattern of the hologram, and is received by a light receiver, such as a CCD or a CMOS, whereby the written information can be reproduced. This hologram apparatus is disclosed in, for example, Patent Document 1.
Patent Document 1: Japanese Unexamined Patent Application Publication No. 2003-43904

### Disclosure of Invention

### Problems to be Solved by the Invention

However, it has been difficult to make the conventional hologram apparatus compact because the light emitter and the light receiver are placed separately. Further, when the recorded information is read, the position of reference light relative to the recording medium is shifted in accordance with the positions of holograms. Therefore, it has been difficult to increase the reading speed.

The present invention has been made in view of the above-described problems, and an object of the invention is to provide a compact hologram apparatus capable of high-speed reading.

### Means for Solving the Problems

In order to overcome the above-described problems, a hologram apparatus according to the present invention includes a light emitter that applies light onto a plurality of holograms provided on a recording medium, and a light receiver that receives light exiting from the holograms.
The light receiver includes a substrate having multiple light-receiving elements arranged on a surface thereof, and the light emitter includes a plurality of light-emitting elements arranged in an array on the substrate of the light receiver so as to be combined with the light receiver.

A hologram apparatus according to the present invention includes a light emitter that applies light onto a plurality of holograms provided on a recording medium, and a light receiver that receives light exiting from the holograms.
The light receiver includes a substrate having multiple light-receiving elements arranged on a surface thereof, and the substrate of the light receiver has a plurality of through holes. The light emitter includes light-emitting elements arranged coaxially with the through holes so that light emitted from the light-emitting elements is applied onto the holograms via the through holes.

In the hologram apparatus according to the present invention, the substrate of the light receiver has a plurality of through portions, and the light-emitting elements of the light emitter are arranged in the through portions, and are exposed on a surface of the substrate on which the light-receiving elements are arranged.

In the hologram apparatus according to the present invention, the substrate of the light receiver is fixed to a driving unit that finely adjusts the position of the light emitter disposed on the substrate relative to the recording medium.

### Advantages of the Invention

According to the hologram apparatus of the present invention, since the light receiver and the light emitter are combined by arranging the light-emitting elements on the substrate of the light receiver, the entire apparatus can be made more compact. Further, the light emitter is constructed by arranging a plurality of light-emitting elements in an array, and there is no need to move the light emitter corresponding to the positions of the holograms. Therefore, the reading speed can be increased.

According to the hologram apparatus of the present invention, since the light-emitting elements are arranged coaxially with a plurality of through holes provided in the substrate of the light receiver, the light receiver and the light emitter are placed adjacent to each other. Therefore, the entire apparatus can be made more compact.

According to the hologram apparatus of the present invention, the light-emitting elements are placed in the through portions provided in the substrate of the light receiver, and are exposed on the surface on which the light-receiving elements are arranged, whereby the light receiver and the light emitter are combined. Therefore, it is easy to integrally produce the light receiver and the light emitter.

According to the hologram apparatus of the present invention, the substrate of the light receiver is fixed to the driving unit that finely adjusts the position of the light emitter disposed on the substrate relative to the recording medium. Therefore, a slight deviation of the recording medium can be corrected.

### Brief Description of the Drawings

[Fig. 1] Fig. 1 is a perspective view of a hologram apparatus according to an embodiment.
[Fig. 2] Fig. 2 is a longitudinal sectional view of a hologram apparatus according to a first embodiment.
[Fig. 3] Fig. 3 is a plan view of the hologram apparatus according to the first embodiment.
[Fig. 4] Fig. 4 is a view showing the relationship between the hologram apparatus and a driving unit in the first embodiment.
[Fig. 5] Fig. 5 is a longitudinal sectional view of a hologram apparatus according to a second embodiment.
[Fig. 6] Fig. 6 is a longitudinal sectional view of a hologram apparatus according to a third embodiment. Reference Numerals
   - 1: hologram apparatus
   - 10: recording medium
   - 11: hologram
   - 20: light receiver
   - 21: light-receiving element
   - 22: substrate
   - 23: diffracted light
   - 24: through portion
   - 25: through hole
   - 30: light emitter
   - 31: light-emitting element
   - 32: lens
   - 33: substrate
   - 34: reference light
   - 40: driving unit
   - 41: unit body
   - 42: first driving frame
   - 43: second driving frame
   - 44: driving microelement
   - 45: elastic member

### Best Mode for Carrying Out the Invention

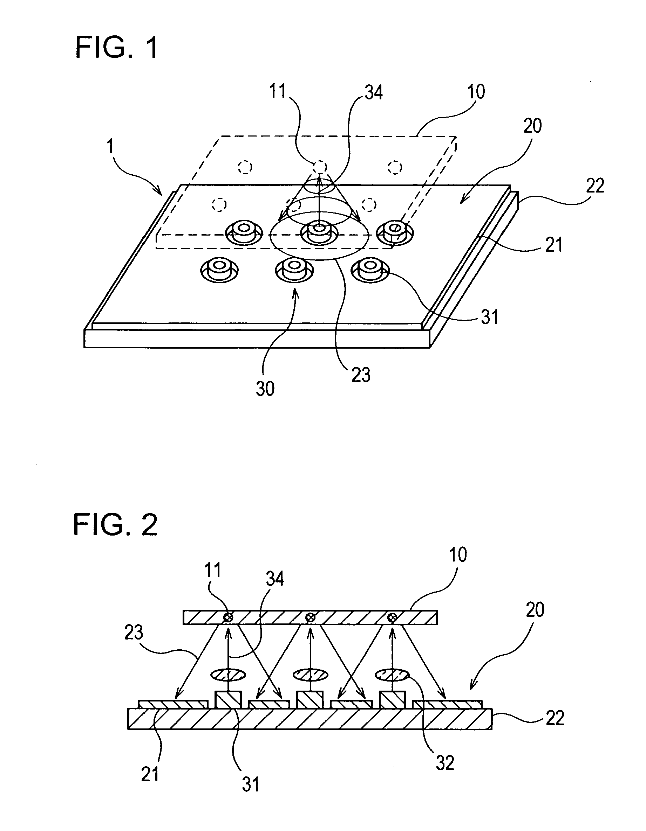

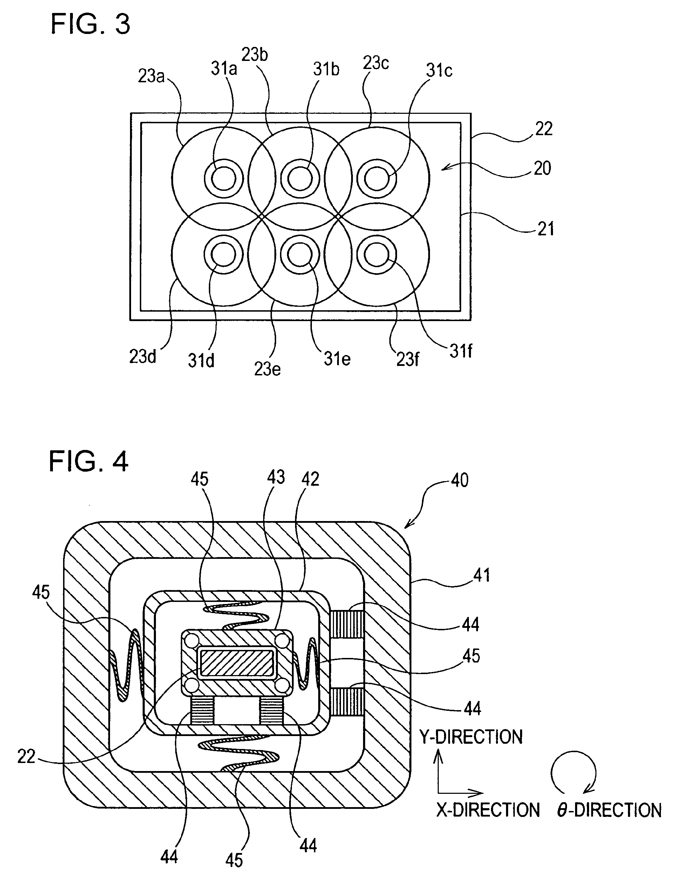

Embodiments of the present invention will be described in detail with reference to the drawings. Fig. 1 is a perspective view of a hologram apparatus 1 according to an embodiment, Fig. 2 is a longitudinal sectional view of a hologram apparatus 1 according to a first embodiment, Fig. 3 is a plan view of the hologram apparatus 1 according to the first embodiment, and Fig. 4 is a view showing the relationship between the hologram apparatus 1 of the first embodiment and a driving unit.

As shown in Fig. 1, the hologram apparatus 1 of this embodiment includes a light emitter 30 that applies reference light 34 onto a plurality of holograms 11 provided on a recording medium 10, and a light receiver 20 that receives diffracted light 23 diffracted by the holograms 11.

Information can be written on the recording medium 10 by forming interference fringes, which are produced by object light containing a page of coded information and the reference light 34, as the holograms 11 in a recording layer. In order to read information recorded on the recording medium 10, the same light as the reference light 34 used to form the holograms 11 is entered in the recording medium 10. The incident light is diffracted by the holograms 11 provided on the recording medium 10, and diffracted light 23 is received by the light receiver 20, whereby the information can be read. The recording medium 10 in this embodiment may be placed in the hologram apparatus 1 beforehand, or may be inserted as a slot card.

A first embodiment will be described. A light receiver 20 in this embodiment includes a substrate 22 having multiple light-receiving elements 21 arranged on its surface, as shown in Fig. 2. By arranging a plurality of light-emitting elements 31 in an array on the substrate 22 of the light receiver 20 to form a light emitter 30, the light receiver 20 and the light emitter 30 are combined. In this embodiment, CMOS image sensors are used as the light-receiving elements 21, and surface-emitting lasers are used as the light-emitting elements 31. By combining the light receiver 20 and the light emitter 30, the hologram apparatus 1 can be made compact. Further, since the light receiver and the light emitter in this embodiment can be formed once in one process, easy production is possible. Each of the light-emitting elements 31 has a lens 32 that collimates emitted light.

It is assumed that holograms 11 are provided at positions on a recording medium 10 used in this embodiment corresponding to the light-emitting elements 31, and information is written therein. Therefore, as shown in Fig. 3, the light-emitting elements 31 and the holograms 11 provided on the recording medium 10 are in a one-to-one correspondence. Light exiting from each light-emitting element 31 is applied onto the corresponding hologram 11, and diffracted light 23 is emitted. In this case, since the light-receiving element 21 is not disposed in a portion of the light-emitting element 31 on which the diffracted light 23 impinges, the diffracted light 23 cannot be received in the portion. Therefore, the holograms 11 provided on the recording medium 10 are shaped like a donut, or necessary information is not contained in portions corresponding to the light-emitting elements 31.

The substrate 22 of the light receiver 20 is fixed to a driving unit 40 that finely adjusts the position of the light emitter 30 disposed on the substrate 22 relative to the recording medium 10. The position of the recording medium 10 sometimes slightly deviates from a predetermined position, for example, because of external impact on the hologram apparatus 1, placement error of the recording medium 10, and entry of dust. When the relative position deviates, the deviation is corrected by finely moving the substrate 22 of the light receiver 20 by the driving unit 40.

The driving unit 40 will be described in detail. As shown in Fig. 4, the driving unit 40 includes a unit body 41 shaped like a frame, a first driving frame 42 stored inside the unit body 41, and a second driving frame 43 stored inside the first driving frame 42, and the substrate 22 of the light receiver 20 is stored and fixed inside the second driving frame 43.

The first driving frame 42 is movable relative to the unit body 41 in the X-direction and the θ-direction via two driving microelements 44 that linearly expand and contract in the X-direction, and has elastic members 45 provided in the X-direction and the Y-direction so as to give resistance to the operation of the driving microelements 44. Herein, the driving microelements 44 are expanded and contracted by the application of an electric field, and are formed of piezoelectric elements as an example. The elastic members 45 are formed of leaf springs, suspend the first driving frame 42 with respect to the unit body 41, and allow the first driving frame 42 to be operated stably. The elastic members 45 are not limited to leaf springs, and may be formed of springs, rubber, or the like.

Since the two driving microelements 44 are provided such as to expand and contract in the X-direction, the first driving frame 42 can be linearly moved in the X-direction relative to the unit body 41 by simultaneously expanding and contracting the two driving microelements 44 by the same length. Further, the first driving frame 42 can be turned relative to the unit body 41 in the θ-direction by expanding and contracting the two driving microelements 44 by different amounts.

The second driving frame 43 is movable in the Y-direction and the θ-direction relative to the first driving frame 42 via two driving microelements 44 that linearly expand and contract in the Y-direction, and has elastic members 45 provided in the X-direction and the Y-direction so as to give resistance to the operation of the driving elements 44.

Since the two driving microelements 44 are provided such as to expand and contract in the Y-direction, the second driving frame 43 can be linearly moved in the Y-direction relative to the first driving frame 42 by simultaneously expanding and contracting the two driving microelements 44 by the same length. That is, the driving microelements 44 of the second driving frame 43 are provided so that the second driving frame 43 moves substantially perpendicularly to the operating direction of the driving microelements 44 provided in the first driving frame 42. Further, the second driving frame 43 can be turned relative to the first driving frame 42 in the θ-direction by expanding and contracting the two driving microelements 44 by different amounts. Similarly to the elastic members 45 provided between the unit body 41 and the first driving frame 42, the elastic members 45 suspend the second driving frame 43 with respect to the first driving frame 42, and allow the second driving frame 43 to be operated stably.

The substrate 22 of the light receiver 20 is placed and fixed inside the second driving frame 43. Therefore, the substrate 22 of the light receiver 20 can be moved in the X-, Y-, and θ-directions relative to the unit body 41 and the recording medium 10 by mutually operating the first driving frame 42 and the second driving frame 43.

A description will be given of a reading method in this embodiment. Light emitted from the light emitter 30 is diffracted by the corresponding holograms 11. As shown in Fig. 3, diffracted light beams 23 are respectively applied onto portions centered on the light-emitting elements 31 provided on the substrate 22 of the light receiver 20. In this case, when the adjacent light-emitting elements 31 simultaneously emit light, obtained diffracted light beams 23 overlap in the light receiver 20, and the light receiver 20 cannot read written information. Therefore, overlapping of the diffracted light beams 23 is prevented by sequentially emitting light from the adjacent light-emitting elements 31 without simultaneously emitting light therefrom.

As shown in Fig. 3, when a light-emitting element 31a emits light simultaneously with adjacent light-emitting elements 31b and 31d, a diffracted light beam 23a diffracted by a hologram 11 corresponding to the light-emitting element 31a overlaps with diffracted light beams 23b and 23d diffracted by the corresponding holograms 11. Therefore, light is first emitted from the light-emitting elements 31a, 31c, and 31e, and diffracted light beams 23a, 23c, and 23e diffracted by the corresponding holograms 11 are received by the light receiver 20. Subsequently, light is emitted form the light-emitting elements 31b, 31d, and 31f, and diffracted light beams 23b, 23d, and 23f diffracted by the corresponding holograms 11 are received. Consequently, the diffracted light beams 23 do not overlap, and all information can be read.

The light-emitting elements 31 and the holograms 11 are in a one-to-one correspondence. The light-emitting elements 31 sequentially emit and apply light onto the holograms 11, and the light receiver 20 receives the diffracted light beams 23 from the holograms 11. For this reason, there is no need to move the light emitter 30 in a stepwise manner corresponding to the positions of the holograms 11, and reading can be performed only once. Since a driving unit for stepwise movement is unnecessary, the entire apparatus can be made compact, and power consumption can be reduced.

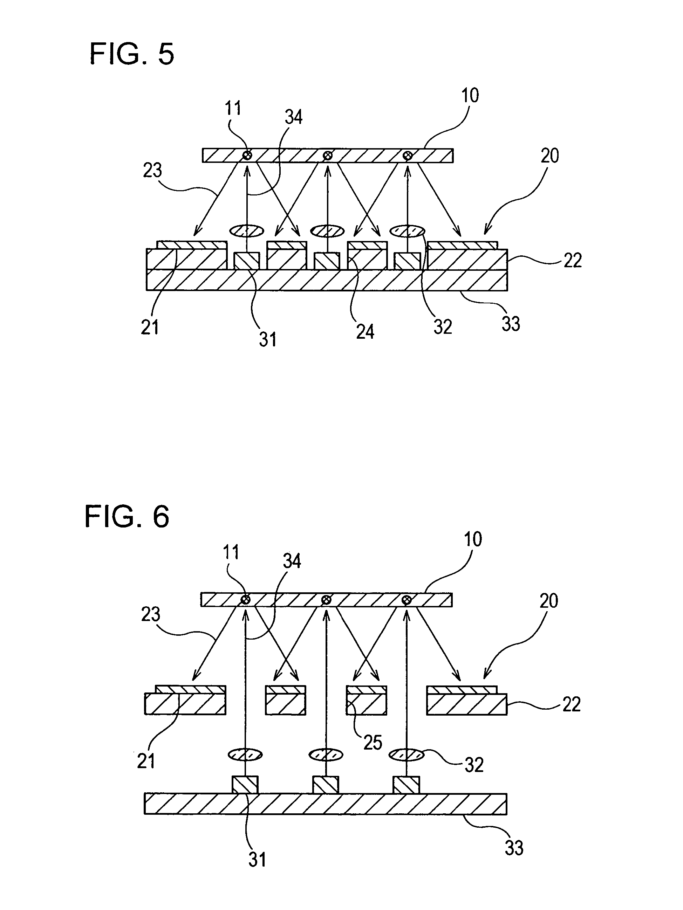

A second embodiment will now be described. As shown in Fig. 5, a light receiver 20 of this embodiment includes a substrate 22 having multiple light-receiving elements 21 arranged on its surface, and the substrate 22 of the light receiver 20 has a plurality of through portions 24. A light emitter 30 includes a substrate 33 having a plurality of light-emitting elements 31 arranged in an array on its surface. The through portions 24 in the substrate 22 of the light receiver 20 are provided at positions corresponding to the light-emitting elements 31. The substrate 22 of the light receiver 20 and the substrate 33 of the light emitter 30 are bonded so that the light-emitting elements 31 are placed in the through portions 24 and are exposed on a surface on which the light-receiving elements 21 are arranged, whereby the light receiver 20 and the light emitter 30 can be combined. This can provide advantages similar to those of the first embodiment.

A third embodiment will now be described. As shown in Fig. 6, a light receiver 20 of this embodiment includes a substrate 22 having multiple light-receiving elements 21 arranged on its surface, and the substrate 22 of the light receiver 20 has a plurality of through holes 25. Light-emitting elements 31 of a light emitter 30 are disposed coaxially with the through holes 25, and light emitted from the light-emitting elements 31 are applied onto holograms 11 via the through holes 25. While the light receiver 20 and the light emitter 30 are not combined in this embodiment, they are adjacent to each other. Therefore, advantages substantially similar to those of the first or second embodiment can be obtained.

While the embodiments of the present invention have been described above, the present invention is not applied only to these embodiments, and are applicable to various applications within the technical scope of the invention. For example, the number of the arrayed light-emitting elements 31 is not limited to that in the embodiments, and may be increased or decreased. The order of light emission from the light-emitting elements 31 is not limited to that in the embodiments as long as diffracted light beams do not overlap in the light receiver. Further, a plurality of pieces of information recorded by wavelength multiplexing can be read by using wavelength-variable light sources as the light-emitting elements 31.

When holograms 11 containing different information are formed at positions shifted by the same amount from a plurality of original holograms 11 provided on the recording medium 10 used in this embodiment, since the original holograms 11 are located corresponding to the light-emitting elements 31, the holograms 11 containing different information and the light-emitting elements 31 are put in a one-to-one correspondence only by being aligned at one point. Since a plurality of pieces of information can be read only by the alignment of one point, reading can be performed at high speed. The light-emitting elements 31 and the holograms 11 are aligned by using the driving unit 40.

## Claims

1. A hologram apparatus comprising:
a light emitter that applies light onto a plurality of holograms provided on a recording medium; and
a light receiver that receives light exiting from the holograms,
wherein the light receiver includes a substrate having multiple light-receiving elements arranged on a surface thereof, and the light emitter includes a plurality of light-emitting elements arranged in an array on the substrate of the light receiver so as to be combined with the light receiver.

2. A hologram apparatus comprising:
a light emitter that applies light onto a plurality of holograms provided on a recording medium; and
a light receiver that receives light exiting from the holograms,
wherein the light receiver includes a substrate having multiple light-receiving elements arranged on a surface thereof, and the substrate of the light receiver has a plurality of through holes, and
wherein the light emitter includes light-emitting elements arranged coaxially with the through holes so that the light emitted from the light-emitting elements is applied onto the holograms via the through holes.

3. The hologram apparatus according to claim 1, wherein the substrate of the light receiver has a plurality of through portions, and the light-emitting elements of the light emitter are arranged in the through portions, and are exposed on a surface of the substrate on which the light-receiving elements are arranged.

4. The hologram apparatus according to claim 1 or 3,
wherein the substrate of the light receiver is fixed to a driving unit that finely adjusts the position of the light emitter disposed on the substrate relative to the recording medium.
